(19)

Europäisches
Patentamt
European
Patent Office
Office européen
des brevets

(11)     EP 2 270 431 A2

(12)                    EUROPEAN PATENT APPLICATION

(43) Date of publication:
    05.01.2011  Bulletin 2011/01

(51) Int Cl.:
    *G01C 21/30* [(2006.01)]

(21) Application number: 10151407.3

(22) Date of filing: 22.01.2010

(84) Designated Contracting States:
    AT BE BG CH CY CZ DE DK EE ES FI FR GB GR
    HR HU IE IS IT LI LT LU LV MC MK MT NL NO PL
    PT RO SE SI SK SM TR

(30) Priority: 30.06.2009  US 495454

(71) Applicant: O2 Micro, Inc.
    Santa Clara, CA 95054 (US)

(72) Inventors:
    • Huang, Haiquang
      610041, Chengdu Sichuan (CN)
    • Yu, Xiaoguang
      430074, Wuhan (CN)

    • Wang, Hongzhang
      430074, Wuhan (CN)
    • Yu, Bo
      610041, Chengdu Sichuan (CN)
    • Xu, Bo
      610041, Chengdu Sichuan (CN)
    • Ji, Yongliang
      610041, Chengdu Sichuan (CN)
    • Chen, Jun
      610041, Chengdu Sichuan (CN)

(74) Representative: Lippert, Stachow & Partner
    Patentanwälte
    Postfach 30 02 08
    51412 Bergisch Gladbach (DE)

(54)    **An inertial navigation system with error correction based on navigation map**

(57)    An inertial navigation system with error correction based on a navigation map is disclosed herein. The inertial navigation system can include a trajectory calculator for calculating a position and an orientation of a moving object based on moving information of the moving object, an error correcting unit coupled to the trajectory calculator for correcting the position and the orientation of the moving object based on reference road information, and a storage unit coupled to the error correcting unit for storing geographical information of a road network and providing the reference road information according to the geographical information of the road network.

FIG. 2

**Description**

BACKGROUND OF THE INVENTION

Field of the invention

The present invention relates to navigation system, more specifically, relates to system for correction position in a navigation system.

Description of Prior Art

An inertial navigation system is a navigation system that includes a calculator and motion sensors to continuously calculate a position, heading angle, velocity, and other information of a moving object without the need for external references. Other terms used to refer to inertial navigation system or closely related devices include inertial guidance system, inertial reference platform, and many other variations.

An inertial navigation system is initially provided with initial navigation information, e.g., a position and an orientation, of a moving object from another source, e.g., a human operator, a GPS satellite receiver, etc., and thereafter calculates the updated navigation information of the moving object by integrating motion information of the moving object, e.g., linear velocity and angular velocity, received from the motion sensors on the initial navigation information. However, accuracy errors and measurement errors of the motion sensors, e.g., a gyroscope and an accelerometer, may accumulate during the integration process. After a relatively long time period, accumulate errors may cause relatively large offsets, which may not be ignored any more, between a real moving line of the moving object and a trajectory line calculated by the inertial navigation system.

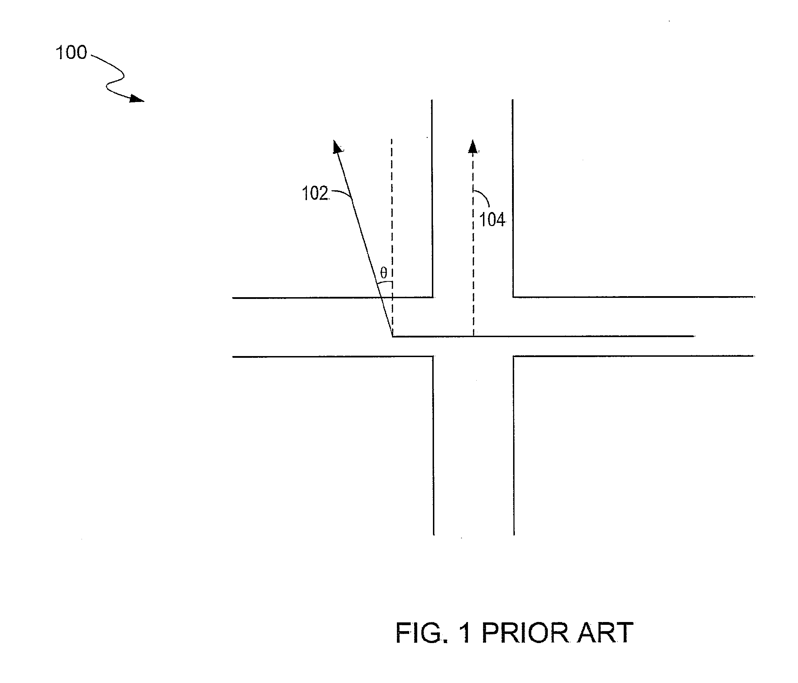

FIG. 1 illustrates a schematic drawing 100 of a trajectory offset of a conventional inertial navigation system caused by accumulated errors. Line 102 is a trajectory line of a moving object calculated by the inertial navigation system. Line 104 is a real moving line of the moving object.

A calculator of the conventional inertial navigation system can calculate a trajectory line of the moving object according to the measured information including linear velocity and angular velocity of the moving object. Because of the accuracy errors and the measurement errors of the motion sensors, the linear velocity and the angular velocity measured by the motion sensors may be different from the real values. As consequence, when the moving object goes straight from the east to the west and then turns to the north at a crossroad, the trajectory line 102 may shift west relative to the real moving line 104 if the measured linear velocity is greater than the real linear velocity of the moving object. Furthermore, a direction of the trajectory line 102 may rotate θ degree anticlockwise relative to a direction of the real moving line 104 if the measured angular velocity is less than the real angular velocity of the moving object.

As result, the trajectory line 102 calculated by the conventional inertial navigation system may be different to the moving line 104. The error between the trajectory line 102 and the moving line 104 may affect the system performance.

SUMMARY OF THE INVENTION

The present invention provides an inertial navigation system with error correction based on a navigation map. The inertial navigation system includes a trajectory calculator for calculating a position and an orientation of a moving object based on moving information of the moving object, an error correcting unit coupled to the trajectory calculator for correcting the position and the orientation of the moving object based on reference road information, and a storage unit coupled to the error correcting unit for storing geographical information of a road network and providing the reference road information according to the geographical information of the road network.

In another embodiment, the present invention provides a method for generating navigation information of a moving object and correcting said navigation information. The method includes calculating a position and an orientation of a moving object by a trajectory calculator based on moving information of the moving object, correcting the position and the orientation by an error correcting unit based on reference road information, and providing the reference road information by a storage unit according to geographical information of a road network stored in the storage unit.

BRIEF DESCRIPTION OF THE DRAWINGS

Features and advantages of embodiments of the claimed subject matter will become apparent as the following detailed description proceeds, and upon reference to the drawings, wherein like numerals depict like parts, and in which:

FIG. 1 illustrates a schematic drawing of a trajectory offset of a conventional inertial navigation system caused by accumulated errors.

FIG. 2 illustrates a block diagram of an inertial navigation system with error correction based on a navigation map, in accordance with one embodiment of the present invention.

FIG. 3 illustrates an exemplary block diagram of an inertial navigation system with error correction based on a navigation map, in accordance with one embodiment of the present invention.

FIG. 4 illustrates a schematic drawing of correcting a calculated position of a moving object based on a navigation map according to one embodiment of the present invention.

FIG. 5 illustrates a schematic drawing of correcting a calculated orientation of a moving object based on a navigation map according to one embodiment of the present invention.

FIG. 6 illustrates a schematic drawing of correcting a calculated position of a moving object based on a navigation map according to one embodiment of the present invention.

FIG. 7 illustrates a flowchart of operations performed by an inertial navigation system with error correction based on a navigation map according to one embodiment of the present invention.

FIG. 8 illustrates a flowchart of a method for correcting navigation information generated by an inertial navigation system based on a navigation map.

DETAILED DESCRIPTION OF THE INVENTION

Reference will now be made in detail to the embodiments of the present invention. While the invention will be described in conjunction with these embodiments, it will be understood that they are not intended to limit the invention to these embodiments. On the contrary, the invention is intended to cover alternatives, modifications, and equivalents, which may be included within the spirit and scope of the invention as defined by the appended claims.

Furthermore, in the following detailed description of the present invention, numerous specific details are set forth in order to provide a thorough understanding of the present invention. However, it will be recognized by one of ordinary skill in the art that the present invention may be practiced without these specific details. In other instances, well known methods, procedures, components, and circuits have not been described in detail as not to unnecessarily obscure aspects of the present invention.

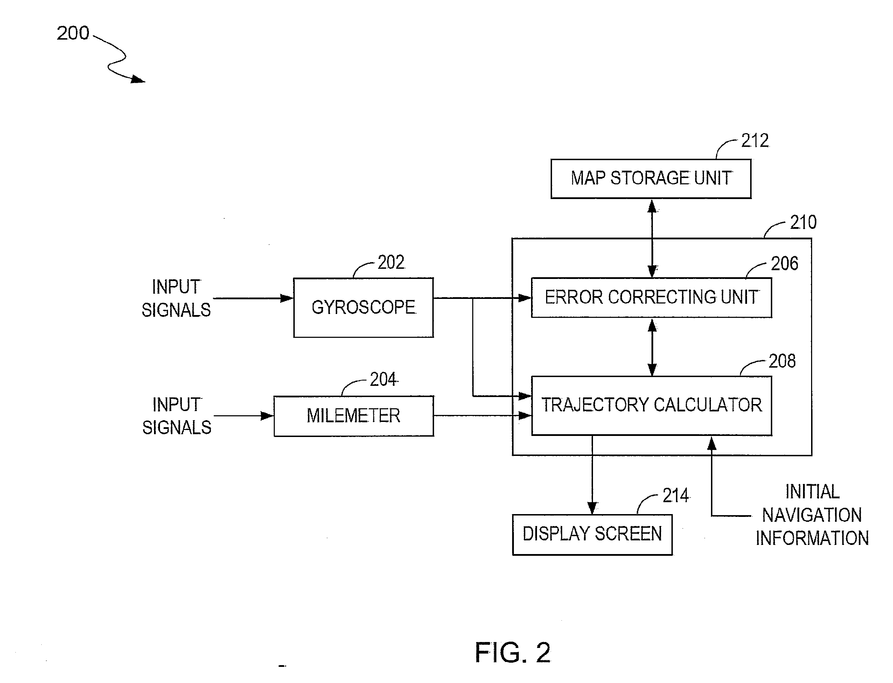

The present invention improves accuracy of a navigation system by reducing the accumulated error of an inertial navigation system according to reference road information indicated in a navigation map. FIG. 2 illustrates a block diagram of an inertial navigation system 200 with error correction based on a navigation map according to one embodiment of the present invention. The inertial navigation system 200 may be integrated into other navigation systems. For example, the inertial navigation system 200 may be used with a global position system (GPS) for tracking a moving object, which may improve the accuracy and performance of the existing navigation system.

As show in FIG. 2, an inertial navigation system 200 may include a plurality of motion sensors coupled to a moving object, e.g., a vehicle, for providing moving information of the moving object. The motion sensors include a gyroscope 202 for measuring and providing an angular velocity of the vehicle based on input signals from the vehicle and a milemeter 204 for measuring and providing a linear velocity of the vehicle based on input signals from the vehicle.

The inertial navigation system 200 further includes a processor 210 for calculating trajectory line of the vehicle and correcting the trajectory line according to reference road information provided by a map storage unit 212. In one embodiment, the processor 210 can get the reference road information based on a navigation map stored in the storage unit 212. The navigation map indicates geographic data of a road network. In another embodiment, the roads in the navigation map can be regarded as single lines with a starting point and an end point. The navigation map can indicate position information and orientation information of the single road lines. In the processor 210, a trajectory calculator 208 can be used to calculate the trajectory line of the vehicle based on the measured linear velocity and angular velocity received from the milemeter 204 and the gyroscope 202 respectively.

When the system starts to operate, the trajectory calculator 208 can periodically update the position and the orientation of the vehicle by integrating the received angular velocity and linear velocity of the vehicle upon the previous position and orientation.

In one embodiment, the inertial navigation system 200 adopts a World Geodetic System (WGS). The World Geodetic System is a standard used in navigation. The World Geodetic System defines a standard coordinate frame for the Earth. In the standard coordinate frame for the Earth, the position of the vehicle consists of a longitude component and a latitude component. The position can be updated by updating the longitude component and the latitude component respectively. The longitude component and the latitude component can be updated periodically based on the current linear velocity of the vehicle and the previous longitude and latitude components according to equation (1).

$$\begin{cases} newLon = oldLon + V_E * T /(R * \cos(oldLon)) \\ newLat = oldLat + V_N * T / R \end{cases} \quad (1)$$

newLon represents the longitude component of the current position. newLat represents the latitude component of the current position. oldLon represents the longitude component of the previous position. oldLat represents the latitude component of the previous position. $V_E$ represents an east component of the linear velocity of the vehicle. $V_N$ represents a north component of the linear velocity of the vehicle. T represents a unit interval of the linear velocity, e.g., 1s. R represents a distance from the previous position to an origin of the standard coordinate frame for the Earth.

The orientation of the vehicle can be updated according to equation (2).

$$newOri = oldOri + V_A * T \quad (2)$$

newOri represents the current orientation. oldOri represents the previous orientation. $V_A$ represents the angular velocity measured by the gyroscope 202 currently. T represents a unit interval of the angular velocity, e.g., 1s.

Additionally, when the system starts up, the initial information including an initial position and an initial orientation of the vehicle can be provided from another source, e.g., a human operator, a GPS satellite receiver and etc., to the trajectory calculator 208. The trajectory calculator 208 can calculate the first position and orientation of the vehicle by integrating the received angular velocity and linear velocity on the initial information.

As result, the trajectory calculator 208 can determine the trajectory line of the vehicle by periodically updating the position and the orientation of the vehicle and sending the trajectory line to a display screen 214. The display screen 214 can also get the navigation map from the map storage unit 212, match the trajectory line to the navigation map and display the trajectory line of the vehicle upon the navigation map.

The processor 21D further includes an error correcting unit 206 for correcting the position and the orientation of the vehicle calculated by the trajectory calculator 208 based on the navigation map stored in the map storage unit 212. In one embodiment, the error correcting unit 206 can correct the position and the orientation of the vehicle when the vehicle turns around a corner or goes straight on a road. In order to monitor moving states of the vehicle, which include turning around a corner and going straight on a road, the error correcting unit 206 periodically calculates a turning angle of the vehicle according to the angular velocity of the vehicle received from the gyroscope 202. The turning angle represents an orientation difference between a current orientation and a previous orientation measured before a predetermined time interval, e.g., 5 seconds.

If the turning angle is within a predetermined range, e.g., from 60 degree to 120 degree, the error correcting unit 206 may conclude that the vehicle is turning around a corner. If the turning angle is less than a predetermined value, e.g., 20 degree, the error correcting unit 206 may conclude that the vehicle is going straight on a road.

If the vehicle turns to road $R_1$ at a corner, the error correcting unit 206 can record a calculated position of the vehicle at the corner, and get a reference position of the corner based on the navigation map from the map storage unit 212. Then if the vehicle keeps going straight on road $R_1$, the error correcting unit 206 can compare the calculated position of the vehicle with the reference position. If a difference between the calculated position and the reference position is greater than a predetermined threshold $P_{THR}$, the error correcting unit 206 can instruct the trajectory calculator 208 to correct the current position of the vehicle according to the navigation map.

If the vehicle goes straight on road $R_2$, the error correcting unit 206 can get the calculated orientation of the vehicle from the trajectory calculator 208, and get a reference orientation of road $R_2$ based on the navigation map from the map storage unit 212. The error correcting unit 206 can compare the current orientation of the vehicle with the reference orientation of road $R_2$. If a difference between the current orientation and the reference orientation is greater than a predetermined threshold $O_{THR}$, the error correcting unit 206 can instruct the trajectory calculator 208 to correct the current orientation of the vehicle according to the navigation map.

Additionally, if the vehicle goes straight on road $R_3$ and an orientation difference between the current orientation of the vehicle and the reference orientation of road $R_3$ is less than the predetermined threshold $O_{THR}$, the error correcting unit 206 can periodically calculate a vertical distance from the current position of the vehicle to the target road line. As described before, each road indicated in the navigation map can be regarded as a single line. If the vertical distance is greater than a predetermined threshold $D_{THR}$, the error correcting unit 206 can instruct the trajectory calculator 208 to correct the current position of the vehicle to a corresponding position on the target road line.

As result, the trajectory calculator 210 can calculate the next position and orientation of the vehicle based on the corrected position and orientation.

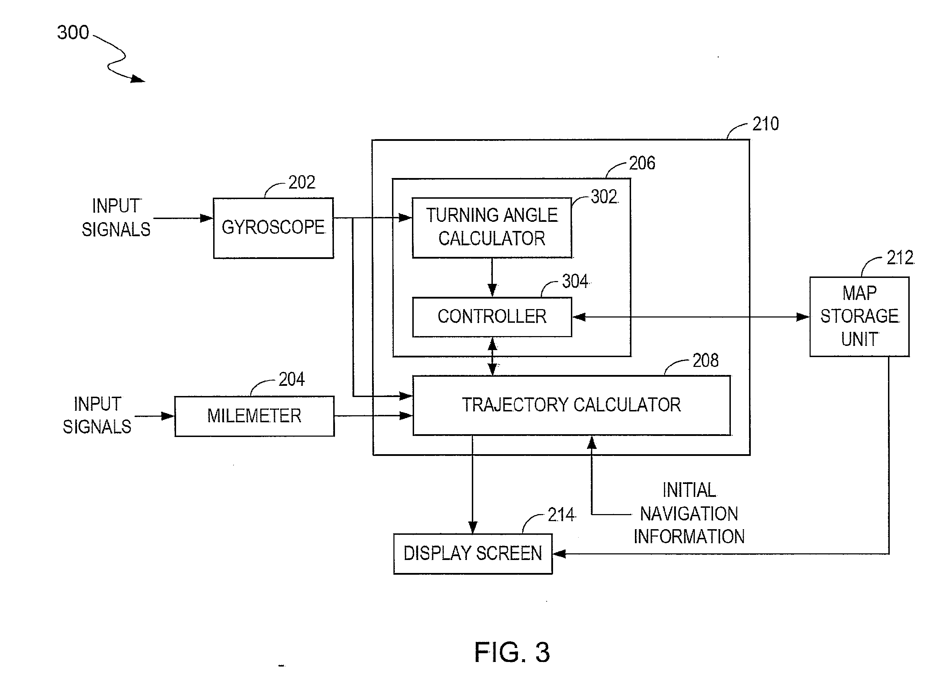

FIG. 3 illustrates an exemplary block diagram of an inertial navigation system 300 with error correction based on a navigation map according to one embodiment of the present invention. Elements that are labeled the same as in FIG. 2 have similar functions and will not be described herein. FIG. 3 is described in combination with FIG. 2.

In the error correcting unit 206, a turning angle calculator 302 is used for periodically calculating a turning angle of a moving object, e.g., a vehicle, based on the angular velocity from the gyroscope 202. A controller 304 is used for monitoring moving states of the vehicle according to the turning angle of the vehicle, and controlling the trajectory calculator 208 to correct the calculated position and orientation of the vehicle according to the corresponding moving states of the vehicle. The moving states of the vehicle can include turning around a corner and going straight on a road.

During operation, the turning angle calculator 302 can receive the angular velocity from the gyroscope 202 periodically and calculate the turning angle of the vehicle according to the angular velocity. More specifically, the gyroscope 202 can generate the current angular velocity of the vehicle to the turning angle calculator 302 periodically. The turning angle calculator 302 can store a predetermined number of the angular velocity values, which are received from the gyroscope 202 sequentially, in a storage unit (not shown). The turning angle calculator 302 can calculate a current turning angle of the vehicle according to equation (3).

$$\theta = V_{A1} * T_1 + V_{A2} * T_2 + V_{A3} * T_3 + .... + V_{An} * T_n \qquad (3)$$

$\theta$ represents the turning angle of the vehicle. $V_{A1}$, $V_{A2}$, ..., and $V_{An}$ represent the angular velocity values stored in the storage unit. $T_1$, $T_2$, ..., and $T_n$ respectively represent time intervals of measuring the angular velocity values $V_{A1}$, $V_{A2}$, ..., and $V_{An}$. The angular velocity values $V_{A1}$, $V_{A2}$, ..., and $V_{An}$ are measured in sequence.

For example, the gyroscope 202 measures the angular velocity of the vehicle every one second. The turning angle calculator 302 stores five angular velocity values $V_{A1}$, $V_{A2}$, $V_{A3}$, $V_{A4}$ and $V_{A5}$ received from the gyroscope 202 sequentially. Then the turning angle of the vehicle can be calculated according to equation (4).

$$\theta = V_{A1} + V_{A2} + V_{A3} + V_{A4} + V_{A5} \qquad (4)$$

After calculating the current turning angle of the vehicle, the turning angle calculator 302 can continue calculating the next turning angle according to a new series of the angular velocity values. In order to get the new series of the angular velocity values, the turning angle calculator 302 can delete the angular velocity value measured firstly, e.g., $V_{A1}$ illustrated in equation(3), from the storage unit and then store a new angular velocity value $V_{A(n+1)}$ measured currently in the storage unit. Therefore, the next turning angle can be calculated based on the new series of the angular velocity values $V_{A2}$, $V_{A3}$, $V_{A4}$, ..., $V_{A(n+1)}$ according to equation (3).

In one embodiment, the turning angle calculator 302 periodically generates the turning angle of the vehicle to the controller 304. The controller 304 can determine whether the vehicle turns around a corner or goes straight on a road during a certain period according to the turning angle. If the turning angle is within a predetermined range, e.g., from 60 degree to 120 degree, the controller 304 can determine that the vehicle turns around a corner. If the turning angle is less than a predetermined value, e.g., 20 degree, the controller 304 can determine that the vehicle goes straight on a road.

According to the corresponding moving states of the vehicle, the controller 304 can get the calculated position and/or orientation of the vehicle from the trajectory calculator 208. The controller 304 can also get the reference position and/or orientation of corresponding roads based on the navigation map from the map storage unit 212. Thereafter, the controller 304 can compare the calculated position and orientation with the reference position and orientation respectively, and instruct the trajectory calculator 208 to correct the calculated position and orientation of the vehicle based on the navigation map according to the comparison result.

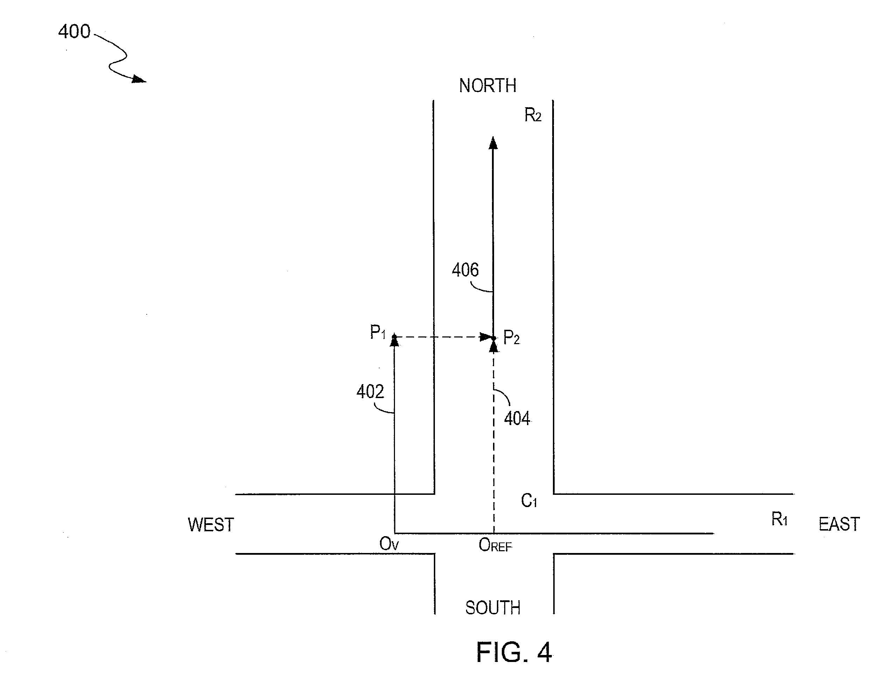

FIG. 4 illustrates a schematic drawing 400 of correcting a calculated position of a moving object based on a navigation map according to one embodiment of the present invention. FIG. 4 is described in combination with FIG. 2 and FIG. 3.

As shown in FIG. 4, line 402 and line 406 are trajectory lines of a moving object, e.g., a vehicle, calculated by the trajectory calculator 208 in the inertial navigation system 200. Broken line 404 is a road line of road $R_2$. As described above, the roads in the navigation map, which is stored in the map storage unit 212, can be regarded as single lines with a start point and an end point.

The vehicle runs on road R1 from the east to the west and then turns north to road $R_2$ at corner $C_1$. Thereafter the vehicle runs straight on road $R_2$. After turning around corner $C_1$, the trajectory line 402 calculated by the trajectory calculator 208 may be shifted west relative to the road line 404, which is the real trajectory line of the vehicle, if the linear velocity measured by the milemeter 204 is greater than the real linear velocity of the moving object.

In order to reduce a position offset of the trajectory line 402, the error correcting unit 206 can monitor the moving state of the vehicle and correct the calculated position of the vehicle based on the navigation map stored in the map storage unit 212 if the vehicle turns to road $R_2$ at corner $C_1$ and then goes straight on road $R_2$.

In one embodiment, the controller 302 monitors the moving state of the vehicle according to the turning angles of the vehicle received from the turning angle calculator 304 periodically. If the vehicle turns to road $R_2$ at corner $C_1$, a

turning angle output from the turning angle calculator 302 can be within a predetermined range, e.g., from 60 degree to 120 degree. Accordingly, the controller 304 can get a calculated position $O_V$ of the vehicle from the trajectory calculator 208 and store it in a storage unit (not shown). The controller 304 can also get a reference position $O_{REF}$ of the start point of the road $R_2$, which is also the position of corner $C_1$, from the map storage unit 212 and store it in the storage unit

Thereafter, the controller 304 can continuously monitor the moving state of the vehicle during a predetermined period after turning around the corner $C_1$. If the latter turning angles, which are received from the turning angle calculator 302 during the predetermined period, are less than a predetermined value, e.g., 20 degree, the controller 304 can determine that the vehicle is going straight on road $R_2$ after turning around corner $C_1$. Accordingly, the controller 304 can compare the calculated position $O_V$ with the reference position $O_{REF}$. Both the calculated position Ov and the reference position $O_{REF}$ were stored previously in the storage unit. After the predetermined period, the vehicle arrives at position $P_1$.

If a difference between the calculated position $O_V$ and the reference position $O_{REF}$ is greater than a predetermined threshold, the trajectory calculator 208 corrects current position $P_1$ to position $P_2$ on the road line 404. In one embodiment, the trajectory calculator 208 can calculate a distance between positions $P_1$ and $O_V$. Position $P_2$ can be determined as a position on the road line 404 while a distance between positions $P_2$ and $O_{REF}$ can be the same as the distance between positions $P_1$ and $O_V$. The trajectory calculator 208 can update the trajectory line 406 of the vehicle based on corrected position $P_2$. As shown, the trajectory line of the vehicle can be corrected based on the navigation map even an accumulated error in the milemeter 204 exists.

If any turning angle received from the turning angle calculator 302 is greater than the predetermined value during the predetermined period, the controller 304 can conclude that the vehicle is not going on a straight line on the road $R_2$ during the predetermined period after turning around corner C1. Hence, the controller 304 removes the calculated position $O_V$ and the reference position $O_{REF}$ from the storage unit. The controller 304 can continue monitoring the moving state of the vehicle. When the vehicle turns around another corner and then goes straight for a predetermined period, the position of the vehicle calculated by the trajectory calculator 208 can be corrected accordingly.

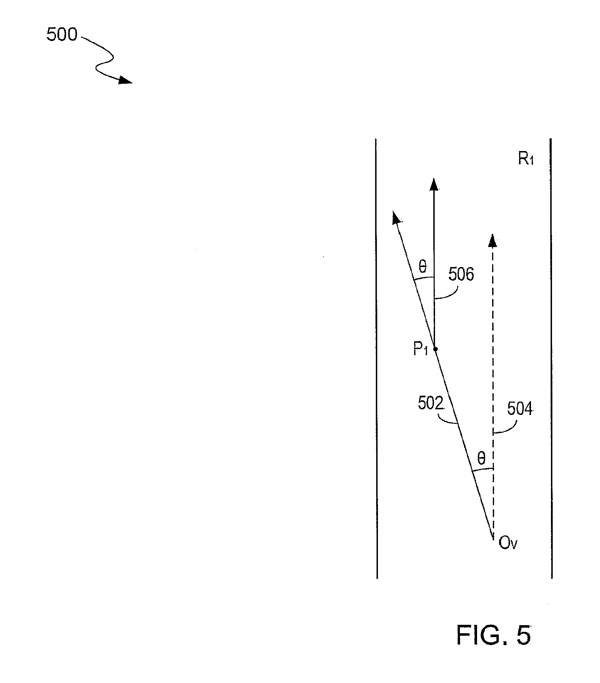

FIG. 5 illustrates a schematic drawing 500 of correcting a calculated orientation of a moving object based on a navigation map according to one embodiment of the present invention. FIG. 5 is described in combination with FIG.2 and FIG. 3.

As shown in FIG. 5, line 502 and line 506 are trajectory lines of the vehicle calculated by the trajectory calculator 208. A broken line 504 is a road line of road R1, which is the real trajectory line of the vehicle. When the vehicle goes straight on road R1, an orientation offset of the trajectory line 502 relative to the road line 504 can be caused by an accumulated error of the gyroscope 202.

In order to reduce an orientation offset of the trajectory line 502, the error correcting unit 206 can correct the calculated orientation of the vehicle based on the navigation map stored in the map storage unit 212 when the vehicle goes straight on road $R_1$.

In one embodiment, the controller 304 monitors the moving state of the vehicle according to the turning angles of the vehicle received from the turning angle calculator 304 periodically. The controller 304 starts to monitor the moving state of the vehicle when the vehicle is at position $O_V$, in one embodiment. If the turning angles calculated by the turning angle calculator 302 during a predetermined period are less then a predetermined value, the controller 304 can conclude that the vehicle goes straight on road $R_1$. Accordingly, the controller 304 gets the calculated orientation of the vehicle from the trajectory calculator 208 and gets the reference orientation of the road line 504 from the map storage unit 212. Thereafter, the controller 304 compares the calculated orientation with the reference orientation. After the predetermined period, the vehicle reaches position $P_1$.

If an orientation difference θ between the calculated orientation and the reference orientation is greater than a predetermined threshold $O_{THR}$, the trajectory calculator 208 corrects the current orientation of the vehicle to the reference orientation. The trajectory calculator 208 can update the trajectory line 506 of the vehicle based on the corrected orientation from position $P_1$. As shown, the trajectory line of the vehicle can be corrected based on the navigation map even an accumulated error in the gyroscope 202 exists.

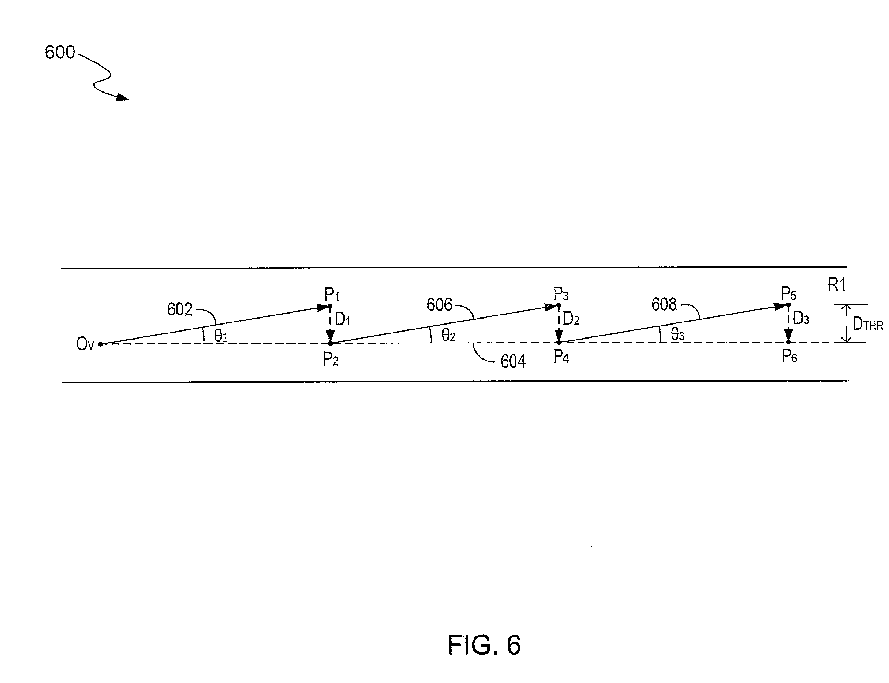

FIG. 6 illustrates a schematic drawing 600 of correcting a calculated position of a moving object based on a navigation map according to one embodiment of the present invention. FIG. 6 is described in combination with FIG. 2 and FIG. 3.

As shown in FIG. 6, lines 602, 606 and 608 are trajectory lines of the vehicle calculated by the trajectory calculator 208. Broken line 604 is a road line of road $R_1$, which is the real trajectory line of the vehicle. When the vehicle goes straight on road $R_1$, an orientation difference between the trajectory line 602 and the road line 604 may be less than the predetermined threshold $O_{THR}$. Hence the orientation of the trajectory line 602 does not need to be corrected. However, a position offset of the trajectory line 602 relative to the road line 604 may be caused by the orientation difference and increased gradually. If the position offset increases higher than a threshold, it may affect the accuracy of the system 200.

In order to reduce the position offset of the trajectory line 602, the error correcting unit 206 can correct the calculated position of the vehicle based on the navigation map stored in the map storage unit 212 when the vehicle goes straight on road $R_1$.

The controller 304 monitors the moving state of the vehicle according to the turning angles of the vehicle received from the turning angle calculator 304 periodically. In one embodiment, the controller 304 starts to monitor the turning angle of the vehicle when the vehicle is at position $O_V$. During a predetermined period, if the turning angles calculated by the turning angle calculator 302 are less then a predetermined value, the controller 304 can determine that the vehicle goes straight on road $R_1$.

Thereafter, the controller 304 periodically gets a calculated position of the vehicle from the trajectory calculator 208 and calculates a vertical distance from the calculated position to the road line 604. If a vertical distance $D_1$ is greater than a predetermined threshold $D_{THR}$ when the vehicle is at position $P_1$, the trajectory calculator 208 corrects the current position of the vehicle to position $P_2$ on the road line 604. A line between position $P_1$ and position $P_2$ can be vertical to the road line 604.

The trajectory calculator 208 can update the trajectory line 606 of the vehicle based on corrected position $P_2$. The controller 304 can continue calculating the vertical distances from the calculated positions to the road line 604. If a vertical distance from position $P_3$ on the trajectory line 606 to the road line 604 is greater than the predetermined threshold $D_{THR}$, the trajectory calculator 208 corrects the current position of the vehicle to position $P_4$ on the road line 604. A line between position $P_3$ and position $P_4$ can be vertical to the road line 604. As shown, the trajectory line of the vehicle can be corrected based on the navigation map even an orientation difference between the orientation of the trajectory line and the road line is less than the predetermined threshold $O_{THR}$.

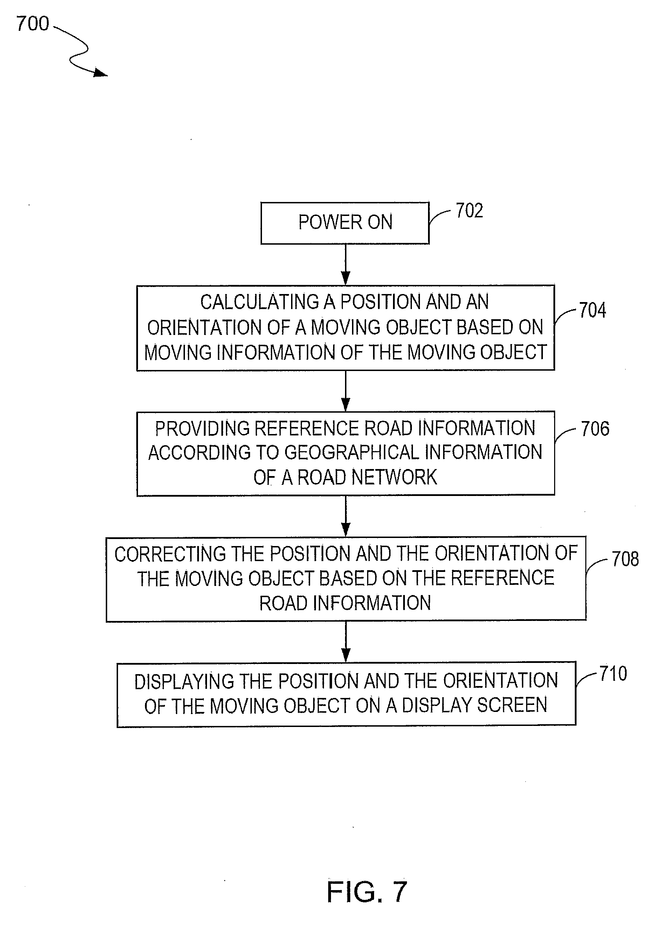

FIG. 7 illustrates a flowchart 700 of operations performed by an inertial navigation system with error correction based on a navigation map, e.g., the inertial navigation system 200 in FIG. 2. FIG. 7 is described in combination with FIG. 2. The inertial navigation system is powered on in block 702. In block 704, the trajectory calculator 208 can calculate a position and an orientation of a moving object based on moving information of the moving object. In one embodiment, the moving information can include angular velocity and linear velocity of the moving object, which are measured by gyroscope 202 and milemeter 204 respectively. In block 706, the map storage unit 212 can store a navigation map indicating geographical information of a road network and provide reference road information according to the navigation map.

In block 708, the error correcting unit 206 can correct the position and the orientation of the moving object calculated by the trajectory calculator 208 based on the reference road information. In one embodiment, the error correcting unit 206 can compare the calculated position and/or orientation of the moving object with a reference position and/or orientation indicated in the reference road information respectively according to different moving states of the moving object. The moving states can include turning around a corner and going straight on a road. The error correcting unit 206 can correct the calculated position and orientation of the moving object according to the navigation map based on the comparison result.

In block 710, the position and the orientation of the moving object can be displayed on the display screen 214.

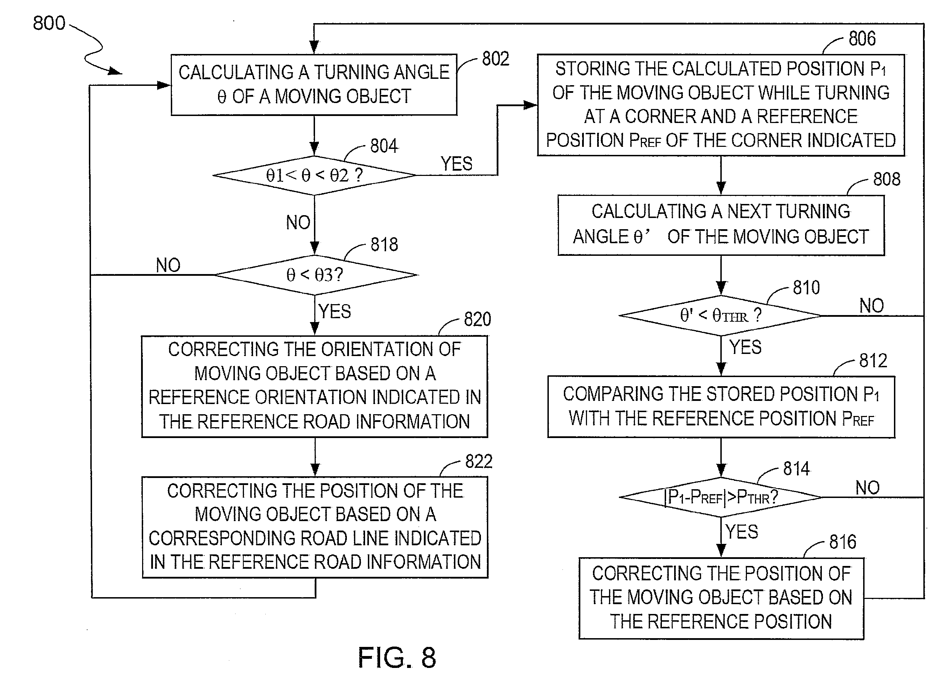

FIG. 8 illustrates a flowchart 800 of a method for correcting navigation information generated by an inertial navigation system, e.g., the inertial navigation system 200 in FIG. 2, based on a navigation map. FIG. 8 is described in combination with FIG. 2 and FIG. 3.

In block 802, the turning angle calculator 302 calculates a turning angle θ of the moving object based on the moving information during a predetermined period. In one embodiment, the turning angle θ can be calculated according to a predetermined number of the angular velocity values received from the gyroscope 202 sequentially. The turning angle θ can be given by equation (5).

$$\theta = V_{A1} * T_1 + V_{A2} * T_2 + V_{A3} * T_3 + .... + V_{An} * T_n \qquad (5)$$

wherein $V_{A1}$, $V_{A2}$, ..., and $V_{An}$ represent a predetermined number of the angular velocity values. $T_1$, $T_2$, ..., and $T_n$ respectively represent time intervals for measuring the angular velocity values $V_{A1}$, $V_{A2}$, ..., and $V_{An}$. The angular velocity values $V_{A1}$, $V_{A2}$, ..., and $V_{An}$ are measured in sequence.

In block 804, if the turning angle θ is within a predetermined range (θ1, θ2), e.g., 60 degree<θ<120 degree, which indicates the moving object turns to a road $R_1$ at a corner, the flowchart goes to block 806. In block 806, the controller 304 can get the current position $P_1$ of the moving object from the trajectory calculator 208 and store it in a storage unit. The controller 304 can also get a reference position $P_{REF}$ of the corresponding corner based on the navigation map from the map storage unit 212, and store it in the storage unit. Then the controller 304 keeps monitoring the moving state of the moving object.

In block 808, the turning angle calculator 302 calculates a next turning angle θ' of the moving object during a next predetermined period, In block 810, if the next turning angle θ' is less than a predetermined threshold ETHER, which indicates the moving object is going straight on the road $R_1$ after turns around the corner, the controller 304 can compare the stored position $P_1$ with the reference position $P_{REF}$ in block 812.

In block 810, if the next turning angle θ' is not less than the predetermined threshold $θ_{THR}$, which indicates the moving object is not going on a straight line on the road $R_1$ after turning around the corner, the flowchart 800 goes back to block 802. The controller 304 can keep monitoring the moving state of the moving object by judging the turning angles of the moving object calculated by the turning angle calculator 302 periodically.

In block 814, if a difference between the stored position $P_1$ and the reference position $P_{REF}$ is greater than a predetermined threshold $P_{THR}$, the controller 304 instructs the trajectory calculator 208 to correct current position of the moving object to a corresponding position on a reference road line of the road $R_1$ in block 816. As result, the position offset of the trajectory calculator 208 can be reduced accordingly. If the difference between the stored position Pi and the reference position $P_{REF}$ is not greater than the predetermined threshold $P_{THR}$ in block 814, the flowchart 800 goes back to block 802.

In block 804, if the turning angle θ is not within the predetermined range (θ1, θ2), the turning angle θ can be judged in block 818. In block 818, if the turning angle θ is less than a predetermined threshold 83, e.g., 20 degree, which indicates the moving object is going straight on a road $R_2$, the orientation calculated by the trajectory calculator 208 can be corrected based on a reference orientation indicated in the reference road information in block 820. In one embodiment, the controller 304 can compare the current orientation calculated by the trajectory calculator 208 with a reference orientation of the road $R_2$. If a difference between the current orientation and the reference orientation is greater than a predetermined threshold, the controller 304 can instruct the trajectory calculator 208 to correct the orientation of the moving object to the reference orientation.

In block 822, the position calculated by the trajectory calculator 208 can be corrected based on a corresponding road line of the road $R_2$ indicated in the reference road information, when the moving object goes straight on the road $R_2$. In one embodiment, the controller 304 can get a current position of the moving object calculated by the trajectory calculator 208 and calculate a vertical distance from the current position of the moving object to the reference road line of the road $R_2$. If the vertical distance is greater than a predetermined threshold, the controller 304 can instruct the trajectory calculator 208 to correct the current position of the moving object to a corresponding position on the reference road line of the road R1.

In block 818, if the turning angle θ is not less than the predetermined threshold 83, the flowchart 800 goes to block 802. Then the controller 304 can keep monitoring the moving state of the moving object by judging the turning angles of the moving object calculated by the turning angle calculator 302 periodically.

Accordingly, embodiments in accordance with the present invention provide an inertial navigation system with error correction based on a navigation map. The inertial navigation system can include a plurality of motion sensors coupled to a moving object for measuring moving information of the moving object, a trajectory calculator coupled to the motion sensors for calculating a position and an orientation of the moving object based on the moving information of the moving object, an error correcting unit coupled to the trajectory calculator for correcting the position and the orientation of the moving object based on reference road information, and a storage unit coupled to the error correcting unit for storing geographical information of a road network and providing the reference road information according to the geographical information of the road network.

In order to reduce the accumulated error, the error correcting unit can compare the calculated position of the moving object with a reference position of a corner indicated in the reference road information when the moving object turns around the corner, and instruct the trajectory calculator to correct the position of the moving object based on the reference road information according to the comparison result. Furthermore, the error correcting unit can compare the calculated orientation of the moving object with a reference orientation of a road indicated in the reference road information when the moving object goes straight on the road, and instruct the trajectory calculator to correct the orientation of the moving object to the reference orientation according to the comparison result. Additionally, the error correcting unit can calculate a distance from the calculated position of the moving object to a reference road line of a road indicated in the reference road information when the moving object goes straight on the road, and instruct the trajectory calculator to correct the position of the moving object to a corresponding position on the reference road line according to the calculation result.

While the foregoing description and drawings represent embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description

**Claims**

1. A navigational system, comprising:

   a trajectory calculator for calculating a position and an orientation of a moving object based on moving information of said moving object;

   an error correcting unit coupled to said trajectory calculator for correcting said position and said orientation of said moving object based on reference road information; and

   a storage unit coupled to said error correcting unit for storing geographical information of a road network and providing said reference road information according to said geographical information of said road network.

2. The navigation system of claim 1, further comprising a plurality of motion sensors coupled to said moving object for measuring said moving information of said moving object.

3. The navigation system of claim 2, wherein said motion sensors comprise:

   a gyroscope coupled to said moving object for measuring an angular velocity of said moving object; and

   a milemeter coupled to said moving object for measuring a linear velocity of said moving object.

4. The navigation system of claim 1, wherein said storage unit stores a navigation map of said road network and provides said reference road information based on said navigation map of said road network.

5. The navigation system of claim 1, wherein said error correcting unit comprises:

   a turning angle calculator for calculating a turning angle of said moving object based on said moving information; and

   a controller coupled to said turning angle calculator for correcting said position and said orientation of said moving object based on said reference road information according to said turning angle of said moving object.

6. The navigation system of claim 5, wherein said controller being capable of:

   calculating a difference between said position of said moving object with a reference position indicated in said reference road information if said turning angle of said moving object is within a predetermined range, and

   instructing said trajectory calculator to correct said position of said moving object according to said reference road information if said difference is greater than a predetermined threshold.

7. The navigation system of claim 5, wherein said controller being capable of:

   calculating a difference between said orientation of said moving object with a reference orientation indicated in said reference road information if said turning angle of said moving object is less than a predetermined threshold, and

   instructing said trajectory calculator to correct said orientation of said moving object to said reference orientation if said difference is greater than a predetermined threshold.

8. The navigation system of claim 5, wherein said controller being capable of:

   calculating a distance from said position of said moving object to a reference road line indicated in said reference road information if said turning angle of said moving object is less than a predetermined threshold, and

   instructing said trajectory calculator to correct said position of said moving object to a corresponding position on said reference road line if said distance is greater than a predetermined threshold.

9. The navigation system of claim 1, further comprising a display screen for displaying said position and said orientation of said moving object.

10. A method for generating navigation information of a moving object and correcting said navigation information, comprising the steps of:

    calculating a position and an orientation of said moving object by a trajectory calculator based on moving

9

information of said moving object;

correcting said position and said orientation of said moving object by an error correcting unit based on reference road information; and

providing said reference road information by a storage unit according to geographical information of a road network stored in said storage unit.

11. The method of claim 10, further comprising the step of:

measuring said moving information of said moving object by a plurality of motion sensors coupled to said moving object.

12. The method of claim 11, wherein the step of measuring said moving information of said moving object comprises the steps of:

measuring an angular velocity of said moving object by a gyroscope coupled to said moving object; and
measuring a linear velocity of said moving object by a milemeter coupled to said moving object.

13. The method of claim 10, further comprising the step of:

storing a navigation map indicating said geographical information of said road network in said storage unit.

14. The method of claim 10, further comprising the steps of:

calculating a turning angle of said moving object by a turning angle calculator based on said moving information; and
correcting said position and said orientation of said moving object by a controller based on said reference road information according to said turning angle of said moving object.

15. The method of claim 14, further comprising the steps of:

calculating a difference between said position of said moving object with a reference position indicated in said reference road information if said turning angle of said moving object is within a predetermined range; and
correcting said position of said moving object according to said reference road information if said difference is greater than a predetermined threshold

16. The method of claim 14, further comprising the steps of:

calculating a difference between said orientation of said moving object with a reference orientation indicated in said reference road information if said turning angle of said moving object is less than a predetermined threshold; and
correcting said orientation of said moving object to said reference orientation if said difference is greater than a predetermined threshold.

17. The method of claim 16, further comprising the steps of:

calculating a distance from said position of said moving object to a reference road line indicated in said reference road information if said turning angle is less than a predetermined threshold; and
correcting said position of said moving object to a corresponding position on said reference road line if said distance is greater than a predetermined threshold.

18. The method of claim 10, further comprising the step of:

displaying said position and said orientation of said moving object on a display screen.

FIG. 1 PRIOR ART

200

212

MAP STORAGE UNIT

210

202

INPUT
SIGNALS → GYROSCOPE

206

ERROR CORRECTING UNIT

204

INPUT
SIGNALS → MILEMETER

208

TRAJECTORY CALCULATOR

214

DISPLAY SCREEN

INITIAL
NAVIGATION
INFORMATION

FIG. 2

300

INPUT
SIGNALS → GYROSCOPE  202

MILEMETER  204
INPUT
SIGNALS →

210

206

TURNING ANGLE
CALCULATOR  302

CONTROLLER  304

TRAJECTORY CALCULATOR  208

MAP
STORAGE
UNIT  212

DISPLAY SCREEN  214

INITIAL
NAVIGATION
INFORMATION

FIG. 3

EP 2 270 431 A2

FIG. 4

FIG. 5

FIG. 6

700

702

POWER ON

704

CALCULATING A POSITION AND AN
ORIENTATION OF A MOVING OBJECT BASED ON
MOVING INFORMATION OF THE MOVING OBJECT

706

PROVIDING REFERENCE ROAD INFORMATION
ACCORDING TO GEOGRAPHICAL INFORMATION
OF A ROAD NETWORK

708

CORRECTING THE POSITION AND THE ORIENTATION OF
THE MOVING OBJECT BASED ON THE REFERENCE
ROAD INFORMATION

710

DISPLAYING THE POSITION AND THE ORIENTATION
OF THE MOVING OBJECT ON A DISPLAY SCREEN

FIG. 7

800

| 802 | 806 |
| CALCULATING A TURNING ANGLE θ OF A MOVING OBJECT | STORING THE CALCULATED POSITION $P_1$ OF THE MOVING OBJECT WHILE TURNING AT A CORNER AND A REFERENCE POSITION $P_{REF}$ OF THE CORNER INDICATED |

804
$\theta1 < \theta < \theta2$ ?   YES

NO

818
$\theta < \theta3$?   NO

YES

820
CORRECTING THE ORIENTATION OF MOVING OBJECT BASED ON A REFERENCE ORIENTATION INDICATED IN THE REFERENCE ROAD INFORMATION

822
CORRECTING THE POSITION OF THE MOVING OBJECT BASED ON A CORRESPONDING ROAD LINE INDICATED IN THE REFERENCE ROAD INFORMATION

808
CALCULATING A NEXT TURNING ANGLE θ' OF THE MOVING OBJECT

810
$\theta' < \theta_{THR}$ ?   NO

YES

812
COMPARING THE STORED POSITION $P_1$ WITH THE REFERENCE POSITION $P_{REF}$

814
$|P_1 - P_{REF}| > P_{THR}$?   NO

YES

816
CORRECTING THE POSITION OF THE MOVING OBJECT BASED ON THE REFERENCE POSITION

FIG. 8